Europäisches Patentamt

European Patent Office

Office européen des brevets

(11) Numéro de publication: **0 324 680**
**A2**

# (12) DEMANDE DE BREVET EUROPEEN

(21) Numéro de dépôt: **89400070.2**

(22) Date de dépôt: **10.01.89**

(51) Int. Cl.⁴: **B 29 B 15/10**
**C 08 J 5/24**

(30) Priorité: **11.01.88 FR 8800189**

(43) Date de publication de la demande:
**19.07.89 Bulletin 89/29**

(84) Etats contractants désignés:
**BE DE ES GB IT SE**

(71) Demandeur: **ARJOMARI-PRIOUX S.A.**
**3 rue du Pont de Lodi**
**F-75006 Paris (FR)**

(72) Inventeur: **Goguelin, Michel**
**Le Guillermet**
**F-38850 Charavines (FR)**

**Gambert, Xavier**
**71, avenue du 4 août**
**F-69100 Villeurbanne (FR)**

(74) Mandataire: **Daudens, Michèle**
**Groupe ARJOMARI 3, rue du Pont de Lodi**
**F-75006 Paris (FR)**

(54) **Procédé de préparation d'une feuille de matériau thermoplastique renforcé et feuille ainsi obtenue.**

(57) L'invention concerne une feuille de matériau thermoplastique renforcé et son procédé de préparation.

Suivant ce procédé, on effectue les étapes suivantes :
- on enduit au moins une face d'un mat de fibres de renforcement d'une composition aqueuse comprenant une résine thermoplastique à l'état parcellaire et un agent de viscosité, et éventuellement un ou plusieurs additifs.
- on sèche la feuille ainsi formée
- on fait fondre la résine.

Ce produit est destiné à être transformé par moulage-estampage, emboutissage ou thermoformage en des objets finis.

EP 0 324 680 A2

Bundesdruckerei Berlin

**Description**

## PROCEDE DE PREPARATION D'UNE FEUILLE THERMOPLASTIQUE RENFORCE ET FEUILLE AINSI OBTENUE

La présente invention concerne un semi-produit thermoplastique renforcé, par exemple un matériau de polypropylène renforcé par des fibres de verre, ainsi que son procédé de fabrication. Ce semi-produit est destiné à être transformé à chaud par moulage-estampage, emboutissage ou thermoformage en des objets finis, par exemple pour l'industrie automobile.

On sait que dans un objet thermoplastique des fibres de renforcement ne produisent un effet maximum que si elles sont toutes mouillées par la résine thermoplastique et uniformément distribuées dans toutes les parties dudit objet.

Le mouillage est d'autant meilleur que les fibres de renforcement sont à l'état unitaire et non pas assemblées sous forme de mèches ou fils de base.

On connaît des matériaux thermoplastiques renforcés, par exemple avec des fibres de verre, fabriqués par extrusion de la résine à l'état fondu sur au moins un mat de fibres de renforcement, comme c'est décrit dans le brevet français n° 2 221 260 de BASF. Les mats, généralement de fils de base, sont imprégnés d'autant plus facilement que la viscosité de la masse fondue est faible et donc que la résine thermoplastique présente une haute fluidité à chaud cependant, lors du moulage. l'écoulement de la matière chaude dans le moule s'effectue avec une séparation entre les fibres de renforcement et la résine qui est en partie exprimée du réseau desdites fibres, si bien que la distribution des fibres n'est pas homogène dans l'objet final qui présente des zones de tension et de fragilité.

On connaît aussi des matériaux thermoplastiques renforcés obtenus par imprégnation à sec d'un mat de fils de base avec une poudre thermoplastique, ou encore formation à sec dudit mat en présence de ladite poudre, comme c'est décrit dans les brevets français n° 2 073 334 (BAYER), et européens n° 86 687 (VITROFIL - MONTEPOLIMERI) et n° 133 119 (AOP).

Le matériau est ensuite chauffé jusqu'à ce que la résine forme une couche plus ou moins continue et densifiée.

On a aussi décrit par exemple dans le brevet US-A-3 684 645, des matériaux thermoplastiques renforcés réalisés par essorage d'une dispersion aqueuse de fibres coupées et de poudre thermoplastique au travers d'un mat de fils de base.

Dans tous ces matériaux. la répartition de la résine en poudre n'est pas toujours régulière et le mouillage des fibres de renforcement lors de la fusion est loin d'être parfait, ce qui diminue les propriétés mécaniques du tout, ou au moins de certaines parties, de l'objet final moulé.

On connaît une dernière catégorie de procédés qui consistent à imprégner un support fibreux avec une dispersion aqueuse de la poudre thermoplastique. De tels procédés ont été décrits dans les publications FR-A-2 223 173 et EP-A- 0 013 244. De façon à obtenir et conserver après sèchage une distribution uniforme de la résine sur les fibres de renforcement, la poudre de ladite résine, après application de la dispersion , doit pouvoir pénétrer à l'intérieur du non-tissé ou du tissu, éventuellement jusqu'à saturation. et s'y fixer. Ces procédés sont donc limités :

- à l'utilisation de résines de point de fusion très bas et/ou par la capacité de sèchage nécessaire.
- à l'emploi de poudres thermoplastiques de faibles granulométries, c'est-à-dire inférieures à celles obtenues industriellement en fin de synthèse ou par broyage conventionnel.
- par les possibilités de règlage de la quantité de poudre, donc de dispersion à déposer et à imprégner.
- enfin, par une certaine durée entre le moment d'application de la dispersion et le début du sèchage, ce qui implique ici aussi des contraintes au niveau de la capacité horaire de production, soit des contraintes dans les dimensions et/ou la conception de la ligne de fabrication.

On connaît enfin des matériaux thermoplastiques renforcés préparés par voie humide selon le principe papetier. Dans ce procédé, on disperse à l'état unitaire des fibres de renforcement en phase aqueuse puis on les mélange à la résine en poudre. Les difficultés rencontrées dans cette technique sont, entre autres, d'obtenir sur la machine à papier une bonne rétention des éléments de la composition (résine et autres additifs en poudre notamment) et de former ainsi une feuille dont la cohésion soit suffisante pour permettre sa manipulation. Afin de les résoudre, on peut ajouter à la composition, un liant latex et des fibres naturelles ou synthétiques à haute surface spécifique comme décrit dans les documents GB-A-1 263 812 et EP-A-0 039 292, mais ces matières premières additionnelles sont souvent préjudiciables au moulage ou à certaines propriétés de l'objet final.

Les principaux inconvénients liés à ces divers procédés de l'art antérieur sont donc :
- un mauvais enrobage des fibres de renforcement par la résine thermoplastique,
- et/ou une mauvaise homogénéité de la répartition des fibres et donc de la teneur en fibres,
- et/ou une mauvaise rétention des poudres thermoplastiques et des additifs,
- et/ou l'introduction de matières premières non souhaitées,
- soit, pour toutes ces raisons, toujours des propriétés mécaniques insuffisantes ou irrégulières.

En outre, tous ces procédés ne permettent pas des capacités de production horaire importantes.

Le but de l'invention est de remédier à tous ces inconvénients de l'art antérieur décrit ci-dessus en proposant un procédé de fabrication d'une feuille à vitesse élevée par enduction en milieu aqueux du renfort fibreux par la résine. Ce procédé comporte les étapes successives suivantes :

1) On prépare une composition aqueuse d'enduction comprenant au moins une résine thermoplastique à l'état parcellaire, et au moins un agent régulateur de viscosité, et éventuellement au moins un additif,

2) On enduit au moins une face d'un mat de fibres de renforcement dispersées à l'état unitaire avec ladite composition aqueuse,

3) On sèche pour obtenir un semi-produit en feuille ,

4) Eventuellement on fait fondre la résine.

Le procédé selon l'invention est tel que l'enduction se fait en surface du mat de fibres, c'est-à-dire qu'après application, la dispersion de résine ne doit pas pénétrer à l'intérieur dudit mat. Ce procédé est donc rapide ; il présente une grande souplesse quant à la nature chimique, la dimension et la géométrie des particules de résine.

Evidemment, il ne pose pas de problème de rétention et la quantité de résine déposée est facilement ajustée selon le taux de renforcement final souhaité. Après séchage, dans le semi-produit obtenu, les particules de résine sont distribuées en surface du mat et cependant, contrairement à ce que l'homme du métier aurait pu s'attendre, après préchauffage et moulage sous pression, on obtient un objet final homogène où résine et fibres sont régulièrement réparties dans les trois dimensions. Ledit objet présente donc de bonnes propriétés mécaniques.

L'invention concerne en outre une feuille de matériau thermoplastique renforcé constituée d'un mat de fibres de renforcement enduit sur au moins une face d'une composition d'enduction comprenant au moins une résine thermoplastique à l'état parcellaire, au moins un agent régulateur de viscosité de la composition d'enduction à l'état aqueux et éventuellement au moins un additif.

Les fibres de renforcement, selon l'invention, sont des fibres dont la structure physique demeure inchangée après moulage. Ce sont, seules ou en mélange, par exemple des fibres cellulosiques, les fibres synthétiques telles que des fibres de carbone, des fibres organiques à haut point de fusion (aramides, polyester et autres), de la laine de verre, la laine de roche, mais selon l'invention, on préfère constituer un renfort par des fibres de verre par exemple dans une proportion de 20 à 50 % en poids de la feuille du semi-produit enduit séché.

Le mat que l'on utilise peut être formé par voie sèche ou par voie humide et peut comporter des fibres coupées ou continues. Afin de faciliter l'enduction du mat par la composition aqueuse et afin d'obtenir un enrobage maximum des fibres par la résine, on utilise préférentiellement un mat où les fibres sont dispersées à l'état unitaire. Afin d'avoir une distribution uniforme du renfort dans l'objet final moulé, les fibres du mat sont préférentiellement des fibres coupées. Ces fibres de renforcement sont réparties de manière aléatoire dans le mat mais une partie peut être orientée dans un sens afin de favoriser dans ce sens les caractéristiques mécaniques.

Les résines thermoplastiques, selon l'invention, sont des polymères ou des mélanges de polymères, et préférentiellement une ou un mélange de polyoléfines (polyéthylène, polypropylène et copolymères) ; les autres polymères thermoplastiques convenant à l'invention sont les polyamides, polyesters satinés, les polystyrènes et leurs copolymères, les polyphénylènes éthers, les polychlorures de vinyle, les polycarbonates et tous autres polymères techniques ou alliages plastiques connus de l'homme du métier.

La résine thermoplastique se présente sous forme parcellaire, à savoir seule ou en mélange sous forme de microfibres, microfibrilles mais préférentiellement la résine de la composition d'enduction est une poudre telle qu'obtenue en fin de synthèse ou par broyage de granulés de résine, par exemple en milieu aqueux. Une partie de la résine thermoplastique du semi-produit enduit est éventuellement apportée par le mat dont elle constitue l'agent liant.

L'agent régulateur de viscosité est choisi dans le groupe formé par les dérivés cellulosiques naturels ou synthétiques, les polyacrylamides, les polyacrylates, les polyméthacrylates et leurs copolymères. De préférence, l'agent régulateur de viscosité ne modifie pas la résistance thermique, du mélange résine thermoplastique, fibres de renforcement et additif éventuel. Plus préférentiellement, il ne modifie pas la résistance aux rayons infra-rouge de ce mélange. Il possède également un certain pouvoir liant de manière à assurer la cohésion après séchage.Le semi-produit selon l'invention pourra en outre comporter, dans un but économique ou technique, certains additifs, parmi lesquels, on peut citer :

- comme renfort, des charges minérales, des microsphères ou microbilles de verre, des fibres de verre broyées, des fibres céramiques, des fibres conductrices.

- comme additifs plastiques, les agents pour améliorer l'adhésion de la résine sur le renfort dans l'objet moulé (post-ensimage de type organosilane, organosilicone et autres, titanates, polymères polaires en dispersion) ; des peroxydes organiques ; des anti-oxydants et autres stabilisants de transformation ou à long terme ; des agents antistatiques ; des pigments ou des colorants ; des ignifugeants.

Enfin, d'une manière générale on peut utiliser tous les additifs connus de l'homme du métier pour améliorer la transformation et les propriétés des matières thermoplastiques.

Ces additifs sont introduits selon leur nature physique (liquide ou solide, poudre ou fibre) soit au niveau du mat avant son utilisation dans le procédé de l'invention, soit au niveau de la composition aqueuse d'enduction.

Selon l'invention, l'agent régulateur de viscosité est un épaississant servant à réguler la viscosité et la rétention d'eau du bain d'enduction, afin d'obtenir une composition aqueuse stable où les poudres des thermoplastiques et des additifs ne décantent ni ne surnagent.

De plus, après séchage, l'agent régulateur fixe les grains de poudre entre eux et sur les fibres de renforcement ce qui rend le semi-produit manipulable sans perte d'éléments.

Il est important de régler la viscosité selon le type de tête d'enduction utilisée, c'est-à-dire selon que l'enduit est ou non transféré du bain d'enduction au mat par l'intermédiaire d'un cylindre. selon aussi que l'étalement et la quantité d'enduction sont réglés par un système de racle(s) ou de cylindre(s). L'homme du métier saura définir l'agent de viscosité à employer ainsi que le degré de viscosité à atteindre en fonction de la vitesse d'enduction, de l'enductrice utilisée et du produit désiré. Bien entendu, le dispositif peut comporter plusieurs têtes d'enduction.

La composition d'enduction aura de préférence une viscosité selon BROOKFIELD (mesurée pour 100 tours/min. à 25 °C tige numéro 4) comprise entre 500 mPa.s et 10 000 mPa.s. On obtient la viscosité souhaitée en ajoutant de préférence le minimum d'agent régulateur et le maximum possible de résine termoplastique.

Parmi les agents régulateurs utilisables, citons entre autres, les dérivés cellulosiques naturels ou synthétiques, les polyacrylamides, les polyacrylates, les polyméthacrylates et leurs copolymères. Les agents régulateurs préférés, selon l'invention, sont des polymères de type acrylique du fait de leur bonne stabilité thermique lors des traitements que doit subir ultérieurement le semi-produit.

Il est, en effet, nécessaire que l'agent régulateur, bien qu'en quantité faible dans le semi-produit, n'abaisse pas la résistance thermique de la composition faite de la résine thermoplastique, des fibres de renforcement et éventuellement des additifs. Par exemple, dans le cas où le semi-produit aurait à être moulé après un préchauffage dans une étuve infra-rouge, il sera préférable de choisir un agent régulateur peu sensible au rayonnement infra-rouge et qui ne modifie pas la résistance qu'aurait à ce préchauffage une composition faite de résine thermoplastique, de fibres de renforcement et éventuellement d'additifs, sans agent régulateur.

Bien entendu, on peut utiliser un mélange d'agents régulateurs de viscosité.

Le procédé de l'invention comprend donc les étapes successives suivantes :

1) On prépare une composition aqueuse comprenant au moins une résine thermoplastique à l'état parcellaire, au moins un agent régulateur de viscosité et éventuellement au moins un additif. Préférentiellement, on réalise d'abord une solution aqueuse épaississante avec l'agent régulateur de viscosité, éventuellement à chaud et/ou en présence d'une base minérale ou organique, puis on ajoute la résine thermoplastique et éventuellement les additifs.

2) On enduit au moins une face d'un mat de fibres de renforcement.

3) On sèche le semi-produit ainsi formé. Le séchage peut être effectué dans une étuve ou un tunnel à air chaud, à infra-rouge, à micro-ondes ou par tout autre moyen connu de l'homme du métier. A ce stade, la feuille a suffisamment de cohésion pour être manipulée ou transformée.

4) Eventuellement on fond la résine thermoplastique :
- soit, en continu avec le séchage en prolongeant le séjour du semi-produit dans le tunnel à une température au moins égale à la température de fusion de la résine, ou encore à l'aide d'une presse à bandes.
- soit, en discontinu :
en procédant à la stratification de plusieurs feuilles en un semi-produit en plaque plus ou moins densifiée, de masse surfacique multiple de celle du semi-produit enduit séché.

L'homme du métier adaptera le mode de fusion en fonction du matériel d'enduction utilisé, de la vitesse désirée et du mode de présentation retenu pour le semi-produit.

L'invention sera mieux comprise à la lecture des exemples suivants :

EXEMPLE I :

On prépare une solution épaississante de viscosité BROOKFIELD (100 tours/min., + 25 °C tige numéro 2) égale à 250 mPa.s. à partir d'une résine soluble en milieu aqueux consistant en un polymère d'acide acrylique réticulé avec un polyéther polyalkényl commercialisé par BF GOODRICH sous le nom de CARBOPOL 940 de poids moléculaire environ 4.000.000. On disperse dans l'eau à 0,9 % en poids.

A 65 % en poids de cette solution épaississante, on ajoute 35 % en poids d'une poudre de polypropylène homopolymère SHELL SY 6100 (fournie par SHELL CHIMIE) et dont le diamètre moyen est de 106 micromètres. On obtient ainsi une composition aqueuse d'enduction de viscosité BROOKFIELD (100 tour/min., + 25 °C tige numéro 4) égale à 1 500 mPa.s.

EXEMPLE II :

On prépare en présence de soude une autre solution épaississante de viscosité BROOKFIELD (100 tours/min., + 25 °C tige numéro 2) égale à 250 mPa.s avec 1,3 % en poids sec d'une dispersion aqueuse anionique d'un copolymère à base d'acrylates renfermant des groupes carboxyliqueset commercialisé sous le nom de STEROCOLL D (par BASF). A 65 % en poids de cette seconde solution épaississante, on ajoute 35 % en poids de poudre SHELL SY 6100 et on obtient comme à l'exemple I, une seconde composition aqueuse d'enduction de viscosité BROOKFIELD {100 tour/min., + 25 °C tige numéro 4) égale à 1 500 mPa.s.

EXEMPLE III :

Un mat de 185 g/m2 préparé par voie aqueuse à partir de 80 % en poids de fibres de verre coupées à 6,5 millimètres, totalement individualisées, et 20 % en poids de liant fibreux (pâte de polyéthylène), est enduit au racle sur une face à raison de 1.143 g/m2 avec la composition aqueuse d'enduction de l'exemple I. Après séchage, on obtient un produit semi-fini en feuille de 590 g/m2, contenant 25 % en poids de fibres de verre et manipulable sans décohesion du revêtement thermoplastique.

EXEMPLE IV :

On reprend le même mat qu'à l'exemple III, et toujours sur une face, on l'enduit cette fois avec la composition aqueuse d'enduction de l'exemple II à raison de 670 g/m2. Après séchage, on a un produit semi-fini en feuille de 425 g/m2 avec 35 % en poids de fibres de verre. Après préchauffage à 240 °C entre des plateaux chauffants, d'un empilement de plusieurs formats de cette feuille on moule par compression à froid une plaque d'épaisseur 3 mm dans laquelle on découpe des éprouvettes de contrôle.

Les fibres de verre sont bien mouillées par la résine et le matériau présente de ce fait de bonnes caractéristiques mécaniques : (elles sont mesurées à 23 °C et 50 % d'humidité relative).

Module de flexion    4 800 mégapascals.

Contrainte en rupture de flexion    100 mégapascals.

Résistance en rupture traction    59 mégapascals.

## Revendications

1) Procédé de préparation d'une feuille de matériau thermoplastique renforcé, caractérisé par le fait qu'on effectue les étapes suivantes :
- on enduit au moins une face d'un mat de fibres de renforcement à l'état unitaire, d'une composition aqueuse comprenant au moins une résine thermoplastique à l'état parcellaire et au moins un agent régulateur de viscosité de la composition aqueuse et éventuellement au moins un additif,
- on sèche la feuille pour obtenir un semi produit en feuille
- éventuellement on fait fondre la résine.

2) Procédé selon la revendication 11, caractérisé par le fait que la composition d'enduction a une viscosité Brookfield (100 tr/min, 25 ° C tige numéro 4) comprise entre 500 et 10.000 mPa.s.

3) Procédé selon l'une quelconque des revendications 11 et 12, caractérisé par le fait que l'agent régulateur de viscosité est choisi dans le groupe formé par les dérivés cellulosiques naturels ou synthétiques, les polyacrylamides, les polyacrylates, les polyméthacrylates et leurs copolymères.

4) Procédé selon l'une quelconque des revendications 11 à 13, caractérisé par le fait que l'agent régulateur de viscosité ne modifie pas la résistance thermique du mélange de résine thermoplastique, fibres de renforcement et de l'additif éventuel.

5) Procédé selon la revendication 14, caractérisé par le fait que l'agent régulateur de viscosité ne modifie pas la résistance aux rayons infra-rouge du mélange de résine thermoplastique, fibres de renforcement et de l'additif éventuel.

6) Procédé selon l'une quelconque des revendications 11 à 15, caractérisé par le fait que le mat de fibres de renforcement est constitué de fibres à l'état unitaire.

7) Procédé selon l'une quelconque des revendications 11 à 16 caractérisé par le fait que les fibres de renforcement sont des fibres de verre.

8) Procédé selon l'une quelconque des revendications 11 à 17 caractérisé par le fait que les fibres du mat de renforcement représentent 20 à 50 % en poids total du semi-produit enduit sec.

9) Procédé selon l'une quelconque des revendications 11 à 18 caractérisé par le fait que la résine thermoplastique est un polypropylène à l'état parcellaire.

10) Procédé selon la revendication 19 caractérisé par le fait que la résine thermoplastique est un polypropylène sous forme de poudre.

11) Feuille obtenue selon l'une des revendications 1 à 10.